# EUROPEAN PATENT SPECIFICATION

(11) **EP 1 216 519 B1**
(45) Date of publication and mention of the grant of the patent: **10.02.2010**
(21) Application number: 00967661.0
(22) Date of filing: 08.09.2000
(51) Int. Cl.: H04B 3/46, H04B 3/23

(54) **MEASURING THE PERCEPTUAL QUALITY OF SPEECH SIGNALS INCLUDING ECHO DISTURBANCES**
MESSUNG DER WAHRNEHMUNGSQUALITÄT VON SPRACHSIGNALEN MIT ECHOSTÖRUNGEN
MESURE DE LA QUALITE PERCEPTIVE DE SIGNAUX VOCAUX COMPRENANT DES PERTURBATIONS DUES AUX ECHOS

(30) Priority: 15.09.1999 NL 1013044
(43) Date of publication of application: 26.06.2002
(73) Proprietor: Koninklijke KPN N.V., 9726 AE Groningen (NL)
(72) Inventor: BEERENDS, John, Gerard, NL-4585 PB Hengstdijk (NL)
(74) Representative: Wuyts, Koenraad Maria
(86) International application number: PCT/EP2000/008884
(87) International publication number: WO 2001/020804

(56) References cited:
- EP-A- 0 719 028
- WO-A-94/00922
- WO-A-97/15124
- WO-A-99/39453

## Description

### A. BACKGROUND OF THE INVENTION

### 1. Field of the invention

The invention lies in the area of measuring the quality of telephone links in telecommunications systems. More in particular, it concerns measuring the influence of echo disturbances and sidetone distortions on the perceptual quality of a telephone link in a telecommunications system as subjectively observed by a talker during a telephone call.

### 2. Prior art

Echo is a significant factor in the perceptual quality of an end-to-end telephone link during a telephone call. The influence of said factor on the perception may be quantified by measuring the combination of a pair of parameters known by the indications "talker echo loudness rating" and "round-trip delay", such as defined, e.g., in the Recommendation G.107 of ITU-T (Reference [1]; for more bibliographical details relating to the references, see below under D.). For a non-intrusive measurement for determining such parameters, ITU-T Recommendation P.561 (see Reference [2]) provides recommendations. Said known technique, however, has the following drawbacks. To measure the influence of the echo disturbance, first of all a correlation technique is required to determine the delay of the echo. Furthermore, a specific algorithm is required for estimating the "talker echo loudness rating". Moreover, determining the echo delay is difficult when the echo signals are of a low level, i.e., when they are located near the limit of perceptibility, as often is the case with speech on high-quality telephone links. Even if a correct estimate is made of the delay and the loudness, even then the differences in perception of the echo disturbance between different talkers are not capable of being measured, since during the measurement no details of the speech signal can be taken into account. Furthermore effects caused by a distortion of the sidetone signal cannot be taken into account either. Therefore, the known technique shows up only a moderate correlation between the objective measurement results and the more subjective findings of the talkers, particularly in the event of slight echo disturbances and/or sidetone distortions.

In fact, in the event of echo on a telephone link between an A subscriber and a B subscriber, a distinction must be made between a so-called talker echo (from A to A) which the talker at the transmission side (A) may experience during conversation, and a listener echo, which the listener at the receiving side (B) may experience while listening. The perception of the influence on the listener of the listener echo, which in fact consists of twice-reflected speech signals, may basically be quantified using a so-called objective measurement technique, such as the Perceptual Speech Quality Measure (PSQM). With said known technique (see, e.g., references [3] and [4]), which models the perceptual properties of human hearing, the listening quality of a one-way speech signal over a telephone link may be predicted. Quantifying the influence of echo and/or sidetone distortion on the perception of the talker using said technique, i.e. measuring the talking quality, however, is not known and not possible just like that, but it is desirable.

A third factor in the quality of telephony systems is the so-called interaction quality, largely determined by the delays in such systems. The interaction quality together with the listening quality and the talking quality determines an overall quality, called conversational quality, of a telephony service.

References [6], [7] and [8] disclose telephone-link circuits which include echo-minimising devices, such as echo cancelors and echo suppressors, for various kinds of echo, such as acoustic echo caused by acoustic reflections in a teleconferencing room of a teleconferencing system (reference [6]), a so-called electrical echo caused in a four-to-two wire conversion in a PSTN/subscriber interface (reference [7] and [8]), and an acoustical/mechanical type of echo caused in the acoustical and mechanical coupling of the loudspeaker and the microphone in a telephone (hand)set (reference [8]). Such echo-minimising devices are usually applied as near as possible to the origin of the echo signal in question in the telecommunication network. A perceptual quality measurement of any talking quality as indicated above is not disclosed at all.

### B. SUMMARY OF THE INVENTION

The object of the invention is to provide for a method and a device for measuring the talking quality, i.e. the influence of returned signals such as echo and/or sidetone distortion on the perceptual quality on the part of the talker of a telephone link in a telecommunications network, which both does not possess said drawbacks of the known technique and accommodates said desire. The invention is defined in the claims.

A further object of the invention is to provide for a telephone-link circuit in which the method and the device are applied.

A method for measuring the talking quality of a telephone link in a telecommunications network according to the preamble of claim 1, according to the invention is characterised as in claim 1.

A device for measuring the talking quality of a telephone link in a telecommunications network according to the preamble of claim 12, for the definition of which reference [4] was applied, according to the invention is characterised as in claim 12.

The invention is based on the insight that a talking telephone user simultaneously listens and therefore hears his own speech signal simultaneously with an echo of his speech and any other signals possibly returning from the headphone of the telephone set. Therefore, the application of an original speech signal, i.c. a talker speech signal, and a combined signal, composed of the original talker speech signal and a corresponding returned signal, as input signals for an objective perceptual quality measurement technique of speech signals, such as PSQM, may lead to a usable estimate of the talking quality, whereas such is not the case if only the original talker speech signal and the corresponding echo or any other corresponding returned signal are used. In this way any distortions in either the echo or the sidetone can also be taken into account in the prediction of the talking quality.

A telephone-link circuit for a telephone link in a telecommunications network, comprising a forward channel and a return channel, and an echo-minimising device included between the forward channel and the return channel, for the definition of which reference [8] was applied, according to the invention is characterised as in claim 17.

Further preferred embodiments of the method, the device and the telephone-link circuit of the invention are summarised in the various subclaims.

### C. REFERENCES

[1] ITU-T Recommendation G.107: The E-model, a computational model for use in transmission planning, December 1998;
[2] ITU-T Recommendation P.561: In-service, non-intrusive measurement device - voice service measurements, February 1996;
[3] J.B. Beerends and J.A. Stemerdink, A perceptual speech quality measure based on a psychoacoustic sound representation. J. Audio Eng. Soc. 42:115-123, March 1994;
[4] ITU-T Recommendation P.861: Objective quality measurement of telephone band (300-3400 Hz) speech codecs, August 1996;
[5] WO 94/00922;
[6] EP-A-0719028;
[7] WO 97/15124;
[8] WO 99/13596.

### D. BRIEF DESCRIPTION OF THE DRAWING

The invention will be further explained by means of the description of exemplary embodiments, reference being made to a drawing comprising the following figures:
- FIG. 1: schematically shows a known method for measuring the perceptual quality of a speech signal;
- FIG. 2: schematically shows a telephone link in a telecommunications network;
- FIG. 3: schematically shows a method according to the invention;
- FIG. 4: shows part of a telephone-link circuit in which the invention is applied.

### E. DESCRIPTION OF EXEMPLARY EMBODIMENTS

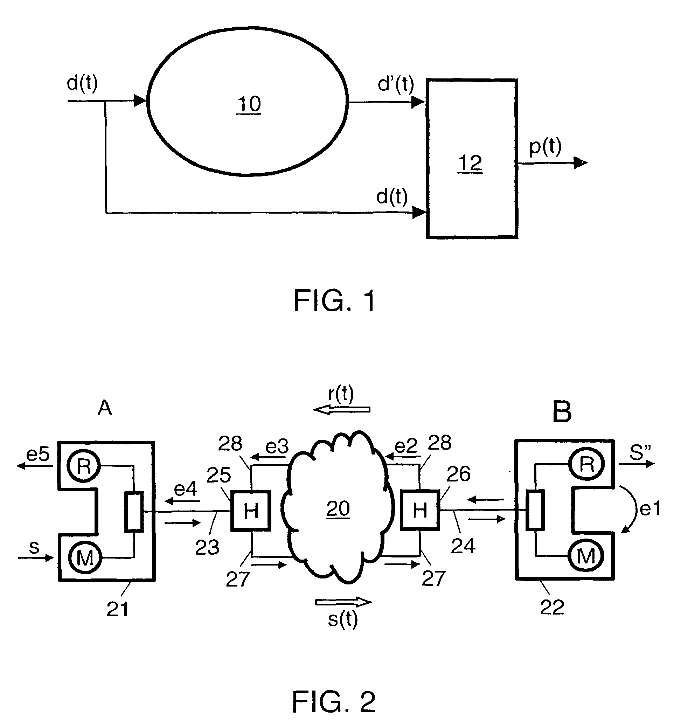

FIG. 1 shows a known schematical setup of an application of an objective measurement technique, such as, e.g., the one based on a model of the human hearing and which is usually designated by PSQM, for estimating the perceptual quality of speech over telephone links. It comprises a system or telecommunications network under test 10, hereinafter referred to as network 10 for briefness' sake, and a system 12 for the perceptual analysis of speech signals offered, hereinafter designated, for briefness' sake only, by PSQM system 12. A speech signal d(t) is used, on the one hand, as an input signal of the network 10 and, on the other hand, as a first input signal of the PSQM system 12. An output signal d'(t) of the network 10, which in fact is the speech signal d(t) affected by the network 10, is used as a second input signal of the PSQM system 12. An output signal p(t) of the PSQM system 12 represents an estimate of the perceptual quality of the speech link through the network 10. Since the input end and the output end of a speech link, particularly in the event it runs through a telecommunications network, are remote, for the input signals of the PSQM system use is made in most cases of speech signals stored on data bases. Here, as is customary, speech signal is understood to mean each sound basically perceptible to the human hearing, such as speech and tones. The system or network being tested may of course also be a simulation system, which simulates a telecommunications network. With this known technique, reliable estimates of the perceptual quality are possible.

FIG. 2 schematically shows a telephone link established between an A subscriber and a B subscriber of a telecommunications network 20. Telephone sets 21 and 22 of the A subscriber and the B subscriber, respectively, are connected by way of two-wire connections 23 and 24 and four-wire interfaces, namely, hybrids 25 and 26, to the network 20. Through the network, the established telephone link has a forward channel including a two-wire part, i.c. two-wire connections 23 and 24, and a four-wire part 27, over which speech signals from the A subscriber are conducted, and a return channel including a two-wire part, i.c. two-wire connections 24 and 23, and a four-wire part 28, over which speech signals from the B subscriber are conducted. An acoustical speech signal s striking the microphone M of the telephone set 21 of the A subscriber, is passed on, by way of the forward channel (23, 27, 24) of the telephone link, to the earphone R of telephone set 22, and becomes audible there for the B subscriber as an acoustical speech signal s" affected by the network. Each speech signal s(t) on the forward channel generally causes a returned signal r(t) which, particularly due to the presence of said hybrids, includes an electrical type of echo signal on the return channel (28, 23) of the telephone link, and this is passed on to the earphone R of the telephone set 21, and may therefore disturb the A subscriber there. Furthermore the acoustic and/or mechanical coupling of the earphone or loudspeaker signal to the microphone of the telephone set of the B subscriber may cause an acoustic type of echo signal back to the telephone set of the A subscriber, which contributes to the returned signal. In an end-to-end digital telephone link (such as in a GSM system or in a Voice-over-IP system) such acoustic echo signal is the only type of echo signal that contributes to the return signal.
Summarizing a returned signal r(t) may include, at various stages in the return channel of a telephone link as caused by a speech signal s(t) in the forward channel of the telephone link:
- a signal e1 representing acoustic echo;
- a signal e2 representing an electrical echo possibly in combination with the acoustic echo;
- a signal e3 which represents the signal e2 as affected, i.e. delayed or distorted, by the network 20;
- a signal e4 which represents the signal e3 in combination with a sidetone signal, and
- a signal e5 which is an acoustic equivalent of the signal e4.

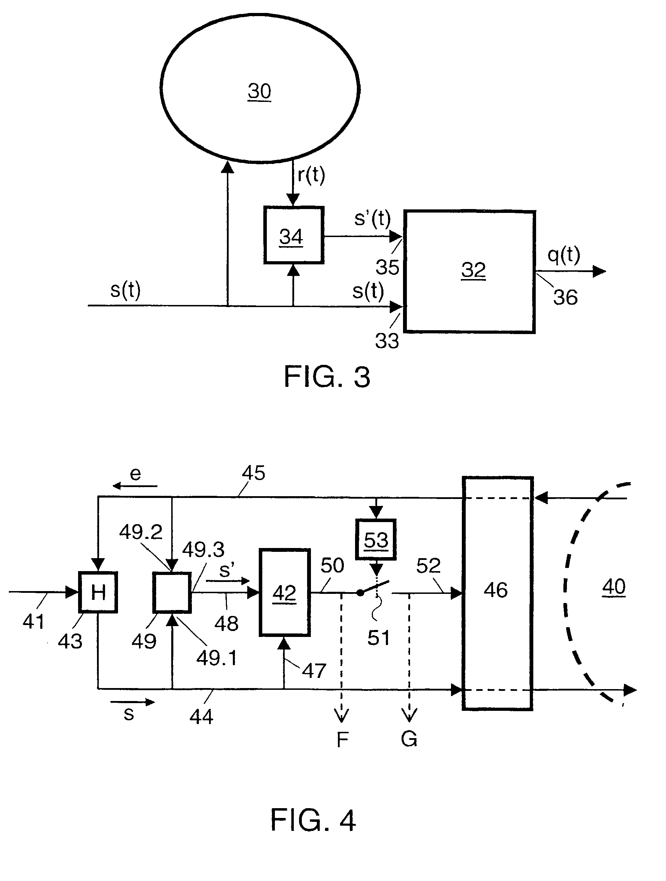

To restrict echo effects in returned signals such as represented by the signals e1 and e2 to a minimum, it is generally customary to include, in telephone-link circuits, echo suppressors or echo cancellers, one at each end of a telephone link. Using the signals present in the forward and return channels, an echo suppressor or canceller continuously makes an estimate of the echo signal and subtracts it from the signal in the return channel. Such an estimate, however, cannot always be carried out reliably, which is particularly the case on high-quality speech links, where the echo signals are at the audibility limit. The optimisation routines applied within such echo suppressors or cancellers do not always provide the best result concerning the perception. Should such optimisation routines be based, at least in part, on the method described below with reference to FIG. 3, then an optimum result having a minimally perceptible echo is possible.

FIG. 3 shows a schematic setup according to the invention, for obtaining an estimate of the perceptual talking quality of a telephone link, for a telephone user when talking on his own telephone set. In a similar manner as the setup of FIG. 1, the setup of FIG. 3 comprises a system or telecommunications network under test 30, hereinafter for briefness' sake referred to as network 30, and a system 32 for the perceptual analysis of speech signals offered, hereinafter for briefness' sake only designated as PSQM system 32. Any talker speech signal s(t) is used, on the one hand, as an input signal of the network 30 and, on the other hand, as first input signal of the PSQM system 32. A returned signal r(t) obtained from the network 30, which corresponds to the input talker speech signal s(t), is combined, in a combination circuit 34, with the talker speech signal s(t) to provide a combined speech signal s'(t), which is then used as a second input signal of the PSQM system. If necessary, the signal s(t) is scaled to the correct level before being combined with the returned signal r(t) in the combination circuit. An output signal q(t) of the PSQM system 32 represents an estimate of the talking quality, i.e. of the perceptual quality of the telephone link through the network 30 as it is experienced by the telephone user during talking on his own telephone set. Here, too, use may again be made of signals stored on data bases. These may be obtained, e.g., from the telephone set (such as signal e4 in the electrical domain or signal e5 in the acoustic domain) of the A subscriber in the event of an established link during speech silence of the B subscriber. The hybrid between the telephone subscriber access point and the four-wire interface with the network does not, or hardly, contribute to the echo component in the returned signal r(t) (of course, it does contribute to the echo component in a returned signal occurring in the return channel of the B subscriber of the telephone link). However, any such signal contribution has a short delay and, as a matter of fact, forms part of the sidetone.

The signals s(t) and r(t) may also be tapped off from a four-wire part 27 of the forward channel and the four-wire part 28 of the return channel near the four-wire interface 25, respectively. This offers the opportunity of a permanent measurement of the perceptual quality in the event of established telephone links. For this purpose, FIG. 4 schematically shows an embodiment.

FIG. 4 shows, in a similar manner as part of FIG. 2, a two-wire connection 41 which, by way of a four-wire interface, in this case hybrid 43, and of four-wire connection parts 44 and 45, is connected to a telecommunications network 40. Through the network an established telephone link may be set up having a forward channel via the two-wire connection 41 and the four-wire connection part 44 and a return channel via the four-wire connection part 45 and the two-wire connection 41. The line circuit belonging to the telephone link includes an echo canceller 46. Also included is a PSQM system 42, of which a first input port 47 is coupled to the four-wire part 44 of the forward channel, and a second input port 48 is coupled to an output port 49.3 of a signal combiner 49 having two input ports 49.1 and 49.2 which are coupled to the four-wire part 44 of the forward channel and the four-wire part 45 of the return channel, respectively. An output port 50 of the PSQM system 42 for quality-control purposes may be coupled directly, or by way of a switch 51 (arrows F and G), to a monitoring system (not shown). In addition the output port 50, as shown, may be coupled, by way of the switch 51, to a control input 52 of the echo canceller 46. The switch 51 is preferably controlled by a control signal given off by a detection circuit 53 (constructed, e.g., as a "double-talk" detection circuit known per se), which is coupled to the return channel for detecting the speech status on the four-wire part 45 of the return channel, such as, e.g., speech silence on the part of the B subscriber. Thus, the estimated signal becoming available by way of the output port 50 of the PSQM system may be used, on the one hand, for all kinds of quality-control purposes and, on the other hand, may be used directly in echo-minimising equipment.

In the most simple embodiments, the combination circuit 34 and the signal combiner 49 are signal adders. When applying the method and the device in practice, in the signal combiner carrying out the adding function (addition) is preferably preceded by the so-called "inversely filtering" of one of the signal components. The inverse filter applied there generates a linear estimate of the echo path, and to a major degree contributes towards achieving a high correlation between an objective measurement and a subjective observation.

In a further embodiment, the signal combination of the speech signal s(t) and the returned signal r(t) is carried out in the acoustical domain, e.g. by recording the relevant acoustical signals by means of one or more additional microphones, to the one used in the telephone handset, near one or both ears of the talking user. In its simplest form the acoustical signal at the non-telephone ear is used as a first input to the PSQM system while the acoustical signal at the telephone ear is used as the second input signal to the PSQM system. In case a so-called head-and-torso-simulator (HATS) is used, the microphones located in the artificial ears of such a HATS can be used. In case only a single microphone is used the first input signal to the PSQM system can be recorded from the acoustic domain using a reference telephone handset while the second input signal to the PSQM system can be recorded from the acoustic domain using the telephone handset with the network under test. (WEGLATEN In this case both recordings contain the same natural acoustical sidetone that can be used to align the non-simultaneously recorded signals.)

## Claims

1. Method for measuring a talking quality of a telephone link in a telecommunications network,
**characterised by** the hollowing steps:
- combining, by means of combining means (34), a talker speech signal (s(t)) and a signal (r(t)), which occurred in a return channel of the telephone link as a consequence of the transmission of the talker speech signal in a forward channel of the telephone link, to a combined speech signal (s'(t)), and
- subjecting the combined speech signal with respect to the talker speech signal to an objective measurement technique (32) for measuring a perceptual quality of speech signals, and
- producing an output signal (q(t)) which represents an estimated value concerning the talking quality.

2. Method according to claim 1, **characterised in that** the combining step comprises a signal addition of the returned signal and the talker speech signal in the electrical domain.

3. Method according to claim 2, **characterised in that** the signal addition is preceded by an inverse filtering of either the returned signal, or the talker speech signal.

4. Method according to claim 2 or 3, **characterised in that** the returned signal (e4) is taken off from a two-wire part (23) of the telephone link.

5. Method according to claim 2 or 3, **characterised in that** the returned signal (e2, e3) is taken off from a four-wire part (28) of the telephone link.

6. Method according to claim 1, **characterised in** the combining step comprises a signal combination of the returned signal and the talker speech signal in the acoustical domain.

7. Method according to claim 6, **characterised in that** the talker speech signal (s) and the returned signal (e5) are combined by means of a microphone, which is additional to the microphone in a telephone set (21) and located near an ear of a talking user of the telephone set.

8. Method according to any of the claims 1-7, **characterised in that** the talker speech signal and the returned signal are taken off from an established telephone link.

9. Method according to claim 8, **characterised in that** the produced output signal of the objective measurement (42) is fed to a control input (52) of an echo-minimising device (46) included in the established telephone link.

10. Method according to claim 9, **characterised in that** the output signal of the objective measurement is fed to a monitoring system (F, G).

11. Method according to any of the claims 1-7, **characterised in that** the talker speech signal, and either the combined signal or the returned signal are signals laid down in a data base.

12. Device for measuring a talking quality of a telephone link in a telecommunications network (30; 40), the device comprising measurement means (32; 42) for an objective measuring of a perceptual quality of speech signals, the measuring means being provided with:
- a first input port (33; 47) for receiving a first speech signal (s(t); s) transmitted or to be transmitted via a forward channel of the telephone link,
- a second input port (35; 48) for receiving a second speech signal (s'(t): s'), which is a function of the first speech signal affected in the telecommunications network,
- an output port (36; 50) for an output signal representing an estimated value of the perceptual quality of the second speech signal with respect to the first speech signal,
**characterised in that**
the device additionally comprises signal combination means (34; 49) for combining the first speech signal (s(t); s) and a third speech signal (r(t); e), thereby generating the second speech signal (s'(t); s'), the first and third speech signal being respectively a talker speech signal and a signal which occurred in a return channel (24, 28, 23; 45, 41) of the telephone link as a consequence of the transmission of the talker speech signal in a forward channel (23, 27, 24; 41, 44) of the telephone link, and the output signal representing an estimated value concerning the talking quality.

13. Device according to claim 12, **characterised in that** the signal combination means comprise a signal adder.

14. Device according to claim 12 or 13, **characterised in that** the signal combination means (49) are provided with first (49.1) and second (49.2) signal inputs, which are coupled to the forward channel (44) and the return channel (45) of an established telephone link, respectively, and that the first input port (47) of the measurement means (42) is coupled to the forward channel, and the second input port (48) of the measurement means is coupled to the signal output of the signal-combination means (49).

15. Device according to claim 14, **characterised in that** the output port (50) is coupled to a control input (52) of an echo-minimizing device (46) included in the established telephone link.

16. Device according to claim 12 or 13, **characterised in that** the first and the second input ports are coupled to a data base of speech signals, on which the first speech signal, and either the second speech signal or the echo signal, are laid down.

17. Telephone-link circuit for a telephone link in a telecommunications network, comprising a forward channel (41, 44) and a return channel (45, 41), and an echo-minimising device (46) included between the forward channel and the return channel,
**characterised in that**
the telephone-link circuit further comprises:
- a signal combiner (49) provided with first and second signal inputs (49.1, 49.2), which are coupled to the forward channel (44) and the return channel (45) of a telephone link, respectively, and with a signal output (49.3), and
- an objective measurement device (42) provided with a first input port (47) coupled to the forward channel (44) and a second input port (48) coupled to the output (49.3) of the signal combiner (49), and an output port (50), for processing a first speech signal received on.the first input port, and with a second speech signal received on the second input port, and for producing an output signal on the output port, said output signal representing an estimated value concerning the talking quality.

18. Telephone-link circuit according to claim 17, **characterised in that** the output port (50) of the measurement device has a signal coupling with a control input (52) of the echo-minimising device (46).

19. Telephone-link circuit according to claim 17 or 18, **characterised in that** there is further provided for a detection device (53) for detecting the speech status over the established telephone link, and for a switch (51) included in the signal coupling with the control input (52), the switch being controlled by the detection device.

20. Telephone-link circuit according to any of the claims 17, 18 or 19, **characterised in that** the output port (50) of the measurement device has a signal coupling (F, G) with a monitoring system.

## Patentansprüche

1. Verfahren zur Messung einer Sprechqualität einer Telefonverbindung in einem Telekommunikationsnetz, **gekennzeichnet durch** die folgenden Schritte:
- ein Sprecher-Sprachsignal (s(t)) und ein Signal (r(t)), das in einem Rückkanal der Telefonverbindung als Folge der Übertragung des Sprecher-Sprachsignals in einem Vorwärtskanal der Telefonverbindung aufgetreten ist, wird mittels eines Kombiniermittels (34) zu einem kombinierten Sprachsignal (s'(t)) kombiniert und
- das kombinierte Sprachsignal wird mit Bezug auf das Sprecher-Sprachsignal einer objektiven Messungstechnik (32) unterzogen, um eine Wahrnehmungsqualität von Sprachsignalen zu messen und
- es wird ein Ausgangssignal (q(t)) produziert, das einen geschätzten Wert bezüglich der Sprechqualität darstellt.

2. Verfahren nach Anspruch 1, **dadurch gekennzeichnet, dass** der Schritt des Kombinierens eine Signaladdition des zurückgekommenen Signals und des Sprecher-Sprachsignals im elektrischen Bereich umfasst.

3. Verfahren nach Anspruch 2, **dadurch gekennzeichnet, dass** der Signaladdition eine inverse Filterung entweder des zurückgekommenen Signals oder des Sprecher-Sprachsignals vorausgeht.

4. Verfahren nach Anspruch 2 oder 3, **dadurch gekennzeichnet, dass** das zurückgekommene Signal (e4) einem Zweidraht-Teil (23) der Telefonverbindung entnommen wird.

5. Verfahren nach Anspruch 2 oder 3, **dadurch gekennzeichnet, dass** das zurückgekommene Signal (e2, e3) einem Vierdraht-Teil (28) der Telefonverbindung entnommen wird.

6. Verfahren nach Anspruch 1, **dadurch gekennzeichnet, dass** der Schritt des Kombinierens eine Signalkombination des zurückgekommenen Signals und des Sprecher-Sprachsignals im akustischen Bereich umfasst.

7. Verfahren nach Anspruch 6, **dadurch gekennzeichnet, dass** das Sprecher-Sprachsignal (s) und das zurückgekommene Signal (e5) mittels eines Mikrofons kombiniert werden, das zusätzlich zu dem Mikrofon in einem Telefonapparat (21) angeordnet ist und sich in der Nähe eines Ohrs eines sprechenden Benutzers des Telefonapparats befindet.

8. Verfahren nach einem der Ansprüche 1 - 7, **dadurch gekennzeichnet, dass** das Sprecher-Sprachsignal und das zurückgekommene Signal einer hergestellten Telefonverbindung entnommen werden.

9. Verfahren nach Anspruch 8, **dadurch gekennzeichnet, dass** das produzierte Ausgangssignal der objektiven Messung (42) einem Steuereingang (52) einer in der hergestellten Telefonverbindung enthaltenen Echominimierungseinrichtung (46) zugeführt wird.

10. Verfahren nach Anspruch 9, **dadurch gekennzeichnet, dass** das Ausgangssignal der objektiven Messung einem Überwachungssystem (F, G) zugeführt wird.

11. Verfahren nach einem der Ansprüche 1 - 7, **dadurch gekennzeichnet, dass** das Sprecher-Sprachsignal und entweder das kombinierte Signal oder das zurückgekommene Signal Signale sind, die in einer Datenbank abgelegt sind.

12. Einrichtung zur Messung einer Sprechqualität einer Telefonverbindung in einem Telekommunikationsnetz (30; 40), wobei die Einrichtung Messmittel (32; 42) für eine objektive Messung einer Wahrnehmungsqualität von Sprachsignalen umfasst, wobei die Messmittel mit Folgendem ausgestattet sind:
- einem ersten Eingangsport (33; 47) zum Empfangen eines ersten Sprachsignals (s(t); s), das über einen Vorwärtskanal der Telefonverbindung übertragen wird oder zu übertragen ist,
- einem zweiten Eingangsport (35; 48) zum Empfangen eines zweiten Sprachsignals (s'(t); s'), das eine Funktion des ersten Sprachsignals ist, das in dem Telekommunikationsnetz beeinflusst wird,
- einem Ausgangsport (36; 50) für ein Ausgangssignal, das einen geschätzten Wert der Wahrnehmungsqualität des zweiten Sprachsignals mit Bezug auf das erste Sprachsignal darstellt,
**dadurch gekennzeichnet, dass**
die Einrichtung zusätzlich Signalkombinationsmittel (34; 49) zum Kombinieren des ersten Sprachsignals (s(t);s) und eines dritten Sprachsignals (r(t); e) umfasst, wodurch das zweite Sprachsignal (s'(t); s') erzeugt wird, wobei das erste und das dritte Sprachsignal jeweils ein Sprecher-Sprachsignal und ein Signal, das in einem Rückkanal (24, 28, 23; 45, 41) der Telefonverbindung als Folge der Übertragung des Sprecher-Sprachsignals in einem Vorwärtskanal (23, 27, 24; 41, 44) der Telefonverbindung aufgetreten ist, sind, und das Ausgangssignal einen geschätzten Wert bezüglich der Sprechqualität darstellt.

13. Einrichtung nach Anspruch 12, **dadurch gekennzeichnet, dass** die Signalkombinationsmittel einen Signaladdierer umfassen.

14. Einrichtung nach Anspruch 12 oder 13, **dadurch gekennzeichnet, dass** die Signalkombinationsmittel (49) mit einem ersten (49.1) und einem zweiten (49.2) Signaleingang ausgestattet sind, die mit dem Vorwärtskanal (44) bzw. mit dem Rückkanal (45) einer hergestellten Telefonverbindung gekoppelt sind, und dass der erste Eingangsport (47) der Messmittel (42) mit dem Vorwärtskanal und der zweite Eingangsport (48) der Messmittel mit dem Signalausgang der Signalkombinationsmittel (49) gekoppelt ist.

15. Einrichtung nach Anspruch 14, **dadurch gekennzeichnet, dass** der Ausgangsport (50) mit einem Steuereingang (52) einer in der hergestellten Telefonverbindung enthaltenen Echominimierungseinrichtung (46) gekoppelt ist.

16. Einrichtung nach Anspruch 12 oder 13, **dadurch gekennzeichnet, dass** der erste und der zweite Eingangsport mit einer Datenbank von Sprachsignalen gekoppelt sind, in der das erste Sprachsignal und entweder das zweite Sprachsignal oder das Echosignal abgelegt sind.

17. Telefonverbindungsschaltung für eine Telefonverbindung in einem Telekommunikationsnetz mit einem Vorwärtskanal (41, 44) und einem Rückkanal (45, 41) und einer zwischen dem Vorwärtskanal und dem Rückkanal vorgesehenen Echominimierungseinrichtung (46),
**dadurch gekennzeichnet, dass**
die Telefonverbindungsschaltung ferner Folgendes umfasst:
- einen Signalkombinierer (49), der mit einem ersten und einem zweiten Eingang (49.1, 49.2), die mit einer Telefonverbindung gekoppelt sind, und mit einem Signalausgang (49.3) ausgestattet ist, und
- eine objektive Messungseinrichtung (42), die mit einem mit dem Vorwärtskanal (44) gekoppelten ersten Eingangsport (47) und einem mit dem Ausgang (49.3) des Signalkombinierers (49) gekoppelten zweiten Eingangsport (48), und einem Ausgangsport (50) ausgestattet ist, zum Verarbeiten eines an dem ersten Eingangsport empfangenen ersten Sprachsignals und mit einem an dem zweiten Eingangsport empfangenen zweiten Sprachsignal und zum Produzieren eines Ausgangssignals an dem Ausgangsport, wobei das Ausgangssignal einen geschätzten Wert bezüglich der Sprechqualität darstellt.

18. Telefonverbindungsschaltung nach Anspruch 17, **dadurch gekennzeichnet, dass** der Ausgangsport (50) der Messungseinrichtung eine Signalkopplung mit einem Steuereingang (52) der Echominimierungseinrichtung (46) aufweist.

19. Telefonverbindungsschaltung nach Anspruch 17 oder 18,
**dadurch gekennzeichnet, dass** ferner eine Detektionseinrichtung (53) zum Detektieren des Sprachstatus über die hergestellte Telefonverbindung und ein in der Signalkopplung mit dem Steuereingang (52) enthaltener Schalter (51) vorgesehen sind, wobei der Schalter durch die Detektionseinrichtung gesteuert wird.

20. Telefonverbindungsschaltung nach einem der Ansprüche 17, 18 oder 19, **dadurch gekennzeichnet, dass** der Ausgangsport (50) der Messungseinrichtung eine Signalkopplung (F, G) mit einem Überwachungssystem aufweist.

## Revendications

1. Procédé de mesure de la qualité de conversation d'une liaison téléphonique dans un réseau de télécommunications,
**caractérisé par** les étapes suivantes :
- combinaison, au moyen d'un moyen de combinaison (34), d'un signal de parole d'un interlocuteur (s(t)) et d'un signal (r(t)), lequel s'est produit dans un canal retour de la liaison téléphonique suite à la transmission du signal de parole de l'interlocuteur dans un canal aller de la liaison téléphonique, à un signal de parole combiné (s'(t)), et
- soumission du signal de parole combiné relativement au signal de parole de l'interlocuteur à une technique de mesure objective (32) pour mesurer une qualité perceptive de signaux de parole ; et
- production d'un signal de sortie (q(t)) qui représente une valeur estimée de la qualité de conversation.

2. Procédé selon la revendication 1, **caractérisé en ce que** l'étape de combinaison comprend une addition de signaux du signal renvoyé et du signal de parole de l'interlocuteur dans le domaine électrique.

3. Procédé selon la revendication 2, **caractérisé en ce que** l'addition de signaux est précédée d'un filtrage inverse du signal renvoyé ou du signal de parole de l'interlocuteur.

4. Procédé selon la revendication 2 ou 3, **caractérisé en ce que** le signal renvoyé (e4) est prélevé sur une partie bifilaire (23) de la liaison téléphonique.

5. Procédé selon la revendication 2 ou 3, **caractérisé en ce que** le signal renvoyé (e2, e3) est prélevé sur une partie quadrifilaire (28) de la liaison téléphonique.

6. Procédé selon la revendication 1, **caractérisé en ce que** l'étape de combinaison comprend une combinaison de signaux du signal renvoyé et du signal de parole de l'interlocuteur dans un domaine acoustique.

7. Procédé selon la revendication 6, **caractérisé en ce que** le signal de parole de l'interlocuteur (s) et le signal renvoyé (e5) sont combinés au moyen d'un microphone, lequel est en sus du microphone compris dans un combiné téléphonique (21) et situé près d'une oreille d'un interlocuteur parlant dans le combiné téléphonique.

8. Procédé selon l'une quelconque des revendications 1 à 7, **caractérisé en ce que** le signal de parole de l'interlocuteur et le signal renvoyé sont prélevés sur une liaison téléphonique établie.

9. Procédé selon la revendication 8, **caractérisé en ce que** le signal de sortie produit de la mesure objective (42) est passé à une entrée de commande (52) d'un dispositif minimiseur d'écho (46) inclus dans la liaison téléphonique établie.

10. Procédé selon la revendication 9, **caractérisé en ce que** le signal de sortie de la mesure objective est passé à un système de surveillance (F, G).

11. Procédé selon l'une quelconque des revendications 1 à 7, **caractérisé en ce que** le signal de parole de l'interlocuteur, et soit le signal combiné, soit le signal renvoyé sont des signaux figurant dans une base de données.

12. Dispositif de mesure d'une qualité de conversation d'une liaison téléphonique dans un réseau de télécommunications (30 ; 40), le dispositif comprenant un moyen de mesure (32 ; 42) pour une mesure objective d'une qualité perceptive de signaux de parole, le moyen de mesure étant doté :
- d'un premier port d'entrée (33 ; 47) pour recevoir un premier signal de parole (s(t) ; s) transmis ou destiné à être transmis par l'intermédiaire d'un canal aller de la liaison téléphonique,
- d'un second port d'entrée (35 ; 48) pour recevoir un second signal de parole (s'(t) ; s'), qui est fonction du premier signal de parole effectué dans le réseau de télécommunications,
- d'un port de sortie (36 ; 50) d'un signal de sortie représentant une valeur estimée de la qualité perceptive du second signal de parole relativement au premier signal de parole,
**caractérisé en ce que**
le dispositif comprend en outre un moyen de combinaison de signaux (34 ; 49) pour combiner le premier signal de parole (s(t) ; s) et un troisième signal de parole (r(t) ; e), générant ainsi le second signal de parole (s'(t) ; s'), les premier et troisièmes signaux de parole étant respectivement un signal de parole d'un interlocuteur et un signal qui s'est produit dans un canal retour (24, 28, 23 ; 45, 41) de la liaison téléphonique suite à la transmission du signal de parole de l'interlocuteur dans un canal aller (23, 27, 24 ; 41, 44) de la liaison téléphonique, et le signal de sortie représentant une valeur estimée de la qualité de conversation.

13. Dispositif selon la revendication 12, **caractérisé en ce que** le moyen de combinaison de signaux comprend un additionneur de signaux.

14. Dispositif selon la revendication 12 ou 13, **caractérisé en ce que** le moyen de combinaison de signaux (49) est doté de première (49.1) et seconde (49.2) entrées de signaux, lesquelles sont couplées au canal aller (44) et au canal retour (45) d'une liaison téléphonique établie, respectivement, et **en ce que** le premier port d'entrée (47) du moyen de mesure (42) est couplé au canal aller, et le second port d'entrée (48) du moyen de mesure est couplé à la sortie de signal du moyen de combinaison de signaux (49).

15. Dispositif selon la revendication 14, **caractérisé en ce que** le port de sortie (50) est couplé à une entrée de commande (52) d'un dispositif minimiseur d'écho (46) inclus dans la liaison téléphonique établie.

16. Dispositif selon la revendication 12 ou 13, **caractérisé en ce que** les premier et second ports d'entrée sont couplés à une base de données de signaux de parole, sur laquelle le premier signal de parole, et soit le second signal de parole soit le signal d'écho, figurent.

17. Circuit de liaison téléphonique pour une liaison téléphonique dans un réseau de télécommunications, comprenant un canal aller (41, 44) et un canal retour (45, 41), et un dispositif minimiseur d'écho (46) inclus entre le canal aller et le canal retour,
**caractérisé en ce que**
le circuit de liaison téléphonique comprend :
- un combineur de signaux (49) doté de première et seconde entrées de signal (49.1, 49.2), lesquelles sont couplées au canal aller (44) et au canal retour (45) d'une liaison téléphonique, respectivement, et d'une sortie de signal (49.3), et
- un dispositif de mesure objective (42) doté d'un premier port d'entrée (47) couplé au canal aller (44) et d'un second port d'entrée (48) couplé à la sortie (49.3) du combineur de signaux (49), et d'un port de sortie (50), pour traiter un premier signal de parole reçu sur le premier port d'entrée, et avec un second signal de parole reçu sur le second port d'entrée, et pour produire un signal de sortie sur le port de sortie, ledit signal de sortie représentant une valeur estimée de la qualité perceptive.

18. Circuit de liaison téléphonique selon la revendication 17, **caractérisé en ce que** le port de sortie (50) du dispositif de mesure comporte un coupleur de signaux avec une entrée de commande (52) du dispositif minimiseur d'écho (46).

19. Circuit de liaison téléphonique selon la revendication 17 ou 18, **caractérisé en ce qu'**il est en outre doté d'un dispositif de détection (53) pour détecter l'état de parole sur la liaison téléphonique établie, et d'un commutateur (51) inclus dans le coupleur de signaux avec l'entrée de commande (52), le commutateur étant commandé par le dispositif de détection.

20. Circuit de liaison téléphonique selon l'une quelconque des revendications 17, 18 ou 19, **caractérisé en ce que** le port de sortie (50) du dispositif de mesure a un coupleur de signaux (F, G) avec un système de contrôle.
